(19) Europäisches Patentamt / European Patent Office / Office européen des brevets

(11) **EP 2 633 347 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**24.09.2025 Patentblatt 2025/39**

(45) Hinweis auf die Patenterteilung:
**31.08.2022 Patentblatt 2022/35**

(21) Anmeldenummer: **11785324.2**

(22) Anmeldetag: **26.10.2011**

(51) Internationale Patentklassifikation (IPC):
**G02B 5/18** (2006.01)    **B42D 15/00** (2006.01)
**B44F 1/10** (2006.01)    **G06K 19/16** (2006.01)

(52) Gemeinsame Patentklassifikation (CPC):
**G02B 5/1814; B42D 25/29; G02B 5/1828; G02B 5/1857; G02B 5/1861;** B42D 25/328

(86) Internationale Anmeldenummer:
**PCT/EP2011/005389**

(87) Internationale Veröffentlichungsnummer:
**WO 2012/055544 (03.05.2012 Gazette 2012/18)**

(54) **GITTERBILD MIT ANEINANDERGRENZENDEN GITTERFELDERN**

GRATING IMAGE HAVING MUTUALLY ADJOINING GRATING FIELDS

IMAGE DE RÉSEAU PRÉSENTANT DES CHAMPS DE RÉSEAU CONTIGUS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.10.2010 DE 102010050105**

(43) Veröffentlichungstag der Anmeldung:
**04.09.2013 Patentblatt 2013/36**

(73) Patentinhaber: **Giesecke+Devrient Currency Technology GmbH**
**81677 München (DE)**

(72) Erfinder:
• **DICHTL, Marius**
  **81371 München (DE)**
• **GERHARDT, Thomas**
  **81549 München (DE)**
• **AMTHOR, Falk**
  **83734 Hausham (DE)**

(74) Vertreter: **Zeuner Summerer Stütz Patent- und Rechtsanwälte Partnerschaft Nußbaumstraße 8 80336 München (DE)**

(56) Entgegenhaltungen:
EP-A1- 0 375 833        EP-A1- 0 375 833
WO-A1-2005/042268    WO-A1-2006/066731
DE-A1- 10 308 327      DE-A1- 102005 032 997
DE-A1- 102005 032 997  DE-A1- 102006 006 323
JP-A- 2000 121 815      JP-A- 2000 121 815
JP-A- 2007 193 356      US-A- 734 135

• "Handbook of Print Media - Technologien und Produktionsverfahren", 1 January 2000, SPRINGER, article KIPPHAN HELMUT: "Digitale Druckvorstufe", pages: 522 - 553, XP093119708

EP 2 633 347 B2

**Beschreibung**

Die Erfindung betrifft ein Gitterbild mit einer Vielzahl von aneinandergrenzenden Gitterfeldern, ein Verfahren zur Herstellung eines derartigen Gitterbilds, ein Sicherheitselement, ein Sicherheitspapier und einen Datenträger mit einem solchen Gitterbild.

Zur Echtheitsabsicherung von Kreditkarten, Banknoten und anderen Wertdokumenten werden seit einigen Jahren Hologramme, holographische Gitterbilder und andere hologrammähnliche Beugungsstrukturen eingesetzt. Im Banknoten- und Sicherheitsbereich werden im Allgemeinen holographische Beugungsstrukturen verwendet, die sich durch Prägung von holographisch erzeugten Gitterbildern in thermoplastisch verformbare Kunststoffe oder UV-härtbare Lack auf Foliensubstraten herstellen lassen.

Echte Hologramme entstehen dabei durch Beleuchtung eines Objekts mit kohärentem Laserlicht und Überlagerung des von dem Objekt gestreuten Laserlichts mit einem unbeeinflussten Referenzstrahl in einer lichtempfindlichen Schicht. Sogenannte holographische Beugungsgitter erhält man, wenn die in der lichtempfindlichen Schicht überlagerten Lichtstrahlen aus räumlich ausgedehnten, einheitlichen kohärenten Wellenfeldern bestehen. Die Einwirkung der überlagerten Wellenfelder auf die lichtempfindliche Schicht, wie etwa einen photographischen Film oder eine Photoresistschicht, erzeugt dort ein holographisches Beugungsgitter, das beispielsweise in Form heller und dunkler Linien in einem photographischen Film oder in Form von Bergen und Tälern in einer Photoresistschicht konserviert werden kann. Da die Lichtstrahlen in diesem Fall nicht durch ein Objekt gestreut worden sind, erzeugt das holographische Beugungsgitter lediglich einen optisch variablen Farbeindruck, jedoch keine Bilddarstellung.

Die Druckschrift WO 2005/038500 A1 beschreibt ein Verfahren zum Erzeugen von Gitterbildern, bei dem ein Gitterbild aus mehreren Teilbereichen zusammengesetzt wird, die jeweils ein bestimmtes Beugungsgitter mit einer einheitlichen Gitterkonstante und einer einheitlichen Winkelorientierung enthalten. Die diffraktiven Teilbereiche liegen dabei in flächenförmiger, streifenförmiger oder pixelartiger Ausführung nebeneinander. Solche Beugungsgitter lassen sich durch direkte oder indirekte optische Belichtung, Prägemastering oder Elektronenstrahllithographie herstellen. Die Druckschrift JP 2000 121815 betrifft ein Beugungsgitterbild mit erhöhter Fälschungssicherheit, bei dem die Bildpunkte des Gitterbilds eine nicht-quadratische, polygonale Form haben und ohne Lücken angeordnet sind.

Ebenfalls bekannt sind Mattstrukturbilder, die sich aus Teilbereichen zusammensetzen, die nicht beugende, sondern streuende Gitter enthalten. So sind in der Druckschrift WO 2005/071444 A2 Gitterfelder mit Strichgitterlinien beschrieben, die durch die Parameter Orientierung, Krümmung, Beabstandung und Profilierung charakterisiert sind, wobei zumindest einer dieser Parameter über der Fläche des Gitterfelds variiert. Variiert zumindest einer der Parameter zufällig, so ergeben sich sogenannte Mattstrukturen, die bei Betrachtung keine diffraktiven Effekte, sondern Streueffekte zeigen und ein mattes, vorzugsweise keinerlei Farbigkeit zeigendes Erscheinungsbild aufweisen.

Ausgehend davon liegt der Erfindung die Aufgabe zugrunde, ein Gitterbild der eingangs genannten Art weiter zu verbessern und insbesondere unter Beibehaltung der bisherigen Vorteile Gitterbilder mit neuen optischen Effekten zu schaffen und/oder die Fälschungssicherheit der Gitterbilder weiter zu erhöhen.

Diese Aufgabe wird durch das Gitterbild mit den Merkmalen des Hauptanspruchs gelöst. Ein Herstellungsverfahren, ein Sicherheitselement, ein Sicherheitspapier sowie ein Datenträger mit einem solchen Gitterbild sind in den nebengeordneten Ansprüchen angegeben. Weiterbildungen der Erfindung sind Gegenstand der abhängigen Ansprüche.

Gemäß der Erfindung weist ein gattungsgemäßes Gitterbild eine Vielzahl von aneinandergrenzenden Gitterfeldern mit einem diffusen, betrachtungswinkelabhängigen visuellen Erscheinungsbild auf, wobei jedes Gitterfeld innerhalb seines Umrisses mit einem Gittermuster aus einer Vielzahl von geraden Strichgitterlinien gefüllt ist und wobei jedes Gittermuster eine Vorzugsrichtung aufweist, die einen Betrachtungswinkel festlegt, aus dem das jeweilige Gittermuster visuell erkennbar ist. Dabei weisen zumindest zwei aneinandergrenzende Gitterfelder entlang ihres gemeinsamen Umrissbereichs jeweils einen nicht-glattrandigen Umriss auf. Die aneinandergrenzenden Gitterfelder verlaufen mit Vorteil entlang ihres gemeinsamen Umrissbereichs ineinander.

Der nicht-glattrandige Umriss ist erfindungsgemäß gesägt, gekerbt, gezähnt, gelappt, gebuchtet oder gewellt sein. Dabei wird ein Umrissbereich zwischen zwei Gitterfeldern, der spitz zulaufende Vorsprünge und spitz zulaufende Einschnitte aufweist, als gesägt bezeichnet, ein Umrissbereich mit runden Vorsprüngen und spitz zulaufenden Einschnitten als gekerbt, ein Umrissbereich mit spitz zulaufenden Vorsprüngen und runden Einschnitten als gezähnt, und ein Umrissbereich mit runden Vorsprüngen und runden Einschnitten je nach der Erstreckung der Vorsprünge und Einschnitte in das Nachbar-Gitterfeld als gelappt, gebuchtet oder gewellt. Im letzteren Fall wird eine große Erstreckung (Vorsprünge bzw. Einschnitte reichen mehr als 50% der Gitterfeldbreite in das benachbarte Gitterfeld) als gelappt, eine mittlere Erstreckung (Vorsprünge bzw. Einschnitte reichen 5% bis 50% der Gitterfeldbreite in das benachbarte Gitterfeld) als gebuchtet und eine geringe Erstreckung (Vorsprünge bzw. Einschnitte reichen weniger als 5% der Gitterfeldbreite in das benachbarte Gitterfeld) als gewellt bezeichnet.

Es versteht sich dass erfindungsgemäß auch kompliziertere Umrissverläufe nach Art einer fraktalen Kurve möglich sind.

Die Abfolge vorgegebener Umrissverläufe kann auch ein Echtheitskennzeichen höherer Stufe bilden, das nur mit einer Lupe oder einem Mikroskop nachgewiesen werden kann.

In einer vorteilhaften Erfindungsvariante weisen die aneinandergrenzenden Gitterfelder entlang ihres gemeinsamen Umrissbereichs jeweils denselben nicht-glattrandigen Umriss auf. Die Gitterfelder schließen dann nahtlos und ohne Überlapp aneinander an.

Gemäß einer anderen, ebenfalls vorteilhaften Erfindungsvariante weist zumindest eines der aneinandergrenzenden Gitterfelder entlang des gemeinsamen Umrissbereichs in einem Überlappungsbereich eine Doppelbelegung mit seinem eigenen Gittermuster und dem Gittermuster des angrenzenden Gitterfelds auf.

Die Gitterfelder weisen mit Vorteil eine lang gestreckte Form mit einer Längsrichtung und einer Querrichtung auf. Sie können vorteilhaft in Form von Streifen oder Ringen ausgebildet sein, oder, insbesondere konzentrisch, der Kontur eines vorgegebenen Motivs folgen. Die Gitterfelder weisen dabei zweckmäßig in Querrichtung eine Breite unterhalb von 2 mm, bevorzugt unterhalb von 1 mm, besonders bevorzugt zwischen 50 $\mu$m und 500 $\mu$m auf. Um den nicht-glattrandigen Umrissverlauf genauer beschreiben zu können, können die Abweichungen des nicht-glattrandigen Umrisses von einem gemittelten, glatten Randverlauf betrachtet werden. Der gemittelte, glatte Randverlauf ergibt sich beispielsweise durch eine abschnittsweise Mittelung des nicht-glattrandigen Umrisses über eine größere Strecke, beispielsweise 1 mm oder einen größeren, statistisch relevanten Streckenabschnitt, und entspricht dem globalen Umriss des Gitterfelds aus dem normalen Betrachtungsabstand von etwa 30 cm. Mit einem solchermaßen definierten gemittelten, glatten Randverlauf liegen die Abweichungen des nicht-glattrandigen Umrisses von dem glatten Randverlauf vorteilhaft unterhalb der Auflösungsgrenze des bloßen Auges.

Die Abweichungen können dabei gemäß einer Variante der Erfindung periodisch sein, wobei die Periodenlänge mit Vorteil unterhalb von 300 $\mu$m, vorzugsweise unterhalb von 200 $\mu$m, besonders bevorzugt zwischen 10 $\mu$m und 100 $\mu$m liegt.

In anderen, ebenfalls beanspruchten Varianten der Efindung sind die Abweichungen des nicht-glattrandigen Umrisses von einem gemittelten, glatten Randverlauf nicht gleichförmig. Für solche Gestaltungen kann eine mittlere Periodenlänge angegeben werden, die zweckmäßig unterhalb von 300 $\mu$m, vorzugsweise unterhalb von 200 $\mu$m, besonders bevorzugt zwischen 10 $\mu$m und 100 $\mu$m liegt.

Sowohl bei gleichförmigen als auch bei nicht gleichförmigen Gestaltungen beträgt die Amplitude der Abweichung des nicht-glattrandigen Umrisses von einem gemittelten, glatten Randverlauf zwischen 10% und 90%, vorzugsweise zwischen 25% und 75% der Breite der beteiligten Gitterfelder.

Die Abweichungen des nicht-glattrandigen Umrisses von einem gemittelten, glatten Randverlauf haben beispielsweise die Form von Zacken, Zähnen, Kerben, Lappen, Buchten oder Wellen. Diese Formen müssen nicht symmetrisch ausgebildet sein, sondern können auch eine asymmetrische Form haben und/ oder in eine vorgegebene Richtung weisen.

Bevorzugt umfassen die Gittermuster diffraktive Gittermuster, die parallele, äquidistante Strichgitterlinien enthalten, die durch die Gitterlinien-Parameter Beabstandung, Winkelorientierung und Profilierung charakterisiert sind. Durch die konstante Winkelorientierung der Strichgitterlinien ist eine Vorzugsrichtung des Gittermusters gegeben, die dazu führt, dass die Gittermuster aus einem festgelegten Betrachtungswinkel mit einem farbigen Erscheinungsbild visuell erkennbar sind. Die diffraktiven Gitterfelder können beispielsweise lineare Gitter, Subwellenlängengitter, Mottenaugenstrukturen oder dergleichen enthalten.

Nach einer ebenfalls bevorzugten Ausgestaltung umfassen die Gittermuster achromatische Gittermuster, die aus dem durch die Vorzugsrichtung festgelegten Betrachtungswinkel mit einem matten, vorzugsweise silbrigen Erscheinungsbild visuell erkennbar sind. Vorzugsweise sind die Strichgitterlinien der achromatischen Gittermuster durch die Gitterlinien-Parameter Orientierung, Beabstandung und Profilierung charakterisiert, wobei in jedem der achromatischen Gittermuster zumindest einer dieser Gitterlinien-Parameter mit einer vorgegebenen Streuung zufällig variiert, so dass die achromatischen Gittermuster jeweils durch die Gittermuster-Parameter mittlere Orientierung, Orientierungsstreuung, mittlere Beabstandung, Beabstandungsstreuung, Profilierung und Profilierungsstreuung charakterisiert sind.

Eine zufällige Variation eines Gitterlinien-Parameters bedeutet dabei, dass der Parameter einer bestimmten Wahrscheinlichkeitsfunktion (bei diskreten Parametern) bzw. Dichtefunktion (bei kontinuierlichen Parametern) gehorcht, die für jeden Wert des Parameters die Auftretenswahrscheinlichkeit bzw. die Wahrscheinlichkeitsdichte dieses Werts angibt. Wird die Häufigkeit der Parameterwerte der Gesamtheit der Strichgitterlinien eines Gitterfelds betrachtet, so wird bei einer Auftragung dieser Häufigkeiten näherungsweise die zugehörige Wahrscheinlichkeitsfunktion bzw. Dichtefunktion dieses Parameters rekonstruiert. Der Parameterwert für eine bestimmte, beliebig herausgegriffene Gitterlinie lässt sich dagegen nicht auf offensichtliche Weise vorhersagen. Die Wahrscheinlichkeitsfunktionen bzw. Dichtefunktionen unterschiedlicher Parameter sind dabei grundsätzlich von einander unabhängig. In manchen Ausgestaltungen kann es sich jedoch anbieten, die Wahrscheinlichkeitsfunktionen bzw. Dichtefunktionen zweier oder mehrerer Parameter miteinander zu verknüpfen.

Die in Betracht kommenden Wahrscheinlichkeitsfunktionen bzw. Dichtefunktionen können sich über einen bestimmten Bereich erstrecken und dort konstant sein, können ein Maximum aufweisen, insbesondere symmetrisch oder asymmetrisch um dieses Maximum verteilt sein, können neben einem Maximum mindestens ein weiteres Nebenmaximum aufweisen, können mehrere etwa gleich hohe Maxima aufweisen, können diskret sein (Wahrscheinlichkeitsfunktionen), d.h. die Gittermuster weisen bezüglich des betrachteten Parameters nur bestimmte, diskrete Werte auf, können kontinuierlich oder quasikontinuierlich sein (Dichtefunktionen), d.h. es treten alle Werte in einem bestimmten kontinuierlichen Bereich auf, oder sie können auch bereichsweise kontinuierlich oder quasikontinuierlich und bereichsweise diskret sein.

Variiert ein Gitterlinien-Parameter über die Fläche eines Gittermusters zufällig, so kann das Gittermuster durch den mittleren Wert dieses Parameters und dessen Streuung beschrieben werden. Auch ein nicht-variierender Parameter kann durch einen mittleren Wert und eine Streuung beschrieben werden, indem für die Streuung der Wert Null gesetzt wird. Der mittlere Wert eines solchen Gittermuster-Parameters ist dann gleich dem konstanten Wert des zugehörigen, nicht-variierenden Gitterlinien-Parameters.

Der Wert des Parameters "mittlere Orientierung" legt dabei eine Vorzugsrichtung eines Gittermusters fest, wenn zugleich die Orientierungsstreuung kleiner als +/-180° ist. Im Rahmen der Erfindung ist die Orientierungsstreuung typischerweise sogar kleiner als +/- 45° und beträgt bevorzugt weniger als +/-10°, besonders bevorzugt weniger als +/- 3°, und insbesondere weniger als +/- 0,3°.

Ein Gitterbild kann ausschließlich diffraktive oder ausschließlich achromatische Gittermuster enthalten, oder es können diffraktive und achromatische Gittermuster in einem Gitterbild kombiniert werden.

Die Gittermuster der Gitterfelder sind vorzugsweise elektronenstrahllithographisch erzeugt. Diese Technik ermöglicht es, Gittermuster herzustellen, bei denen für jede einzelne Gitterlinie die Parameter Orientierung, Beabstandung und Profilierung eindeutig vorgegeben werden können. Bei der Erzeugung eines Gittermusters kann damit auch eine gewünschte Zufallsverteilung der Parameter Orientierung, Beabstandung und Profilierung der Gitterlinien mit einer vorgegebenen Wahrscheinlichkeits- bzw. Dichtefunktion verwirklicht werden.

Es hat sich als zweckmäßig herausgestellt, wenn die Strichgitterlinien eine Linienprofiltiefe zwischen etwa 100 nm und etwa 400 nm aufweisen. Das Verhältnis von Linienbreite zur mittleren Beabstandung in den Gittermustern beträgt vorteilhaft etwa 1:2. Die Strichgitterlinien weisen mit Vorteil ein sinoidales Profil, ein symmetrisches Dreiecksprofil (Sägezahnprofil) oder ein Rechteckprofil (Binärstruktur) auf. Es versteht sich, dass grundsätzlich auch beliebige andere Profile einsetzbar sind, wobei sich jedoch Sägezahnprofile durch eine besonders hohe Leuchtkraft und sinoidale Profile durch eine zuverlässige Herstellung bewährt haben.

Der Gitterlinien-Parameter Beabstandung bzw.

der Gittermuster-Parameter mittlere Beabstandung liegt zweckmäßig zwischen 100 nm und 10 $\mu$m, bevorzugt zwischen 300 nm und 3000 nm, besonders bevorzugt zwischen 500 nm und 1600 nm. Der Wert des Gittermuster-Parameters Orientierungsstreuung beträgt vorzugsweise weniger als +/-10°, bevorzugt weniger als +/- 3°, besonders bevorzugt weniger als +/- 0,3°.

In einer vorteilhaften Erfindungsvariante enthält das Gitterbild ein Bewegungsbild, also ein Bild, das unter unterschiedlichen Kippwinkeln ein vorgegebenes Bildmotiv in unterschiedlichen Bewegungszuständen zeigt, so dass für den Betrachter beim Kippen des Gitterbildes ein Bewegungsbild entsteht.

Nach einer weiteren vorteilhaften Erfindungsvariante enthält das Gitterbild ein Pumpbild, also ein Bild, das unter unterschiedlichen Kippwinkeln eine sich vergrößernde oder verkleinernde Kontur eines vorgegebenen Bildmotivs zeigt, so dass für den Betrachter beim Kippen des Gitterbildes ein Pumpbild entsteht.

Gemäß einer weiteren vorteilhaften Erfindungsvariante enthält das Gitterbild ein Rotationsbild, also ein Bild, das unter unterschiedlichen Kippwinkeln gegeneinander gedrehten Ansichten eines vorgegebenen Bildmotivs zeigt, so dass für den Betrachter beim Kippen des Gitterbildes ein Rotationsbild entsteht.

Das erfindungsgemäße Gitterbild selbst ist vorzugsweise mit einem reflektierenden oder hochbrechenden Material beschichtet. Als reflektierende Materialien kommen alle Metalle und viele Metalllegierungen in Betracht. Beispiele für geeignete hochbrechende Materialien sind $CaS$, $CrO_2$, $ZnS$, $TiO_2$ oder $SiO_x$. Mit Vorteil besteht ein signifikanter Unterschied zwischen dem Brechungsindex des Mediums, in das das Gitterbild eingebracht ist, und dem Brechungsindex des hochbrechenden Materials, wobei die Brechungsindexdifferenz vorzugsweise größer als 0,3 insbesondere sogar größer als 0,5 ist. Das Gitterbild kann in eingebetteter oder nicht eingebetteter Ausgestaltung erzeugt werden, wobei zur Einbettung beispielsweise PVC, PET, Polyester, oder eine UV-Lackschicht verwendet werden kann.

Es versteht sich, dass sich die erfindungsgemäßen Gitterbilder mit weiteren visuellen und/oder maschinenlesbaren Sicherheitsmerkmalen kombinieren lassen. Beispielsweise kann das Gitterbild mit Funktionsschichten, wie etwa polarisierenden, phasenschiebenden, leitfähigen, magnetischen und/oder lumineszierenden Schichten, versehen sein.

In einer besonders vorteilhaften Ausgestaltung weist das Gitterbild einen farbkippenden Dünnschichtaufbau auf. Dabei kann die gesamte Fläche des Gitterbilds oder auch nur eine Teilfläche mit dem Dünnschichtaufbau versehen sein. Der Dünnschichtaufbau kann je nach gewünschter Anwendung opak oder semitransparent ausgebildet sein und umfasst zumindest drei Schichten. Insbesondere kann der Schichtaufbau eine Reflexionsschicht, eine Absorberschicht und eine zwischen Reflexionsschicht und Absorberschicht angeordnete dielektrische Abstandsschicht umfassen.

Die Erfindung umfasst auch ein Verfahren nach Anspruch 10.

Die Gitterfelder werden dabei mit Vorteil elektronenstrahllithographisch erzeugt. Zur Erzeugung der oben genannten reflektierenden Schichten, hochbrechenden Schichten und Dünnschichten können unterschiedliche Bedampfungsverfahren zum Einsatz kommen, wie etwa PVD-Verfahren mit Schiffchenbedampfung, Bedampfung durch Widerstandsheizung, Bedampfung durch Induktionsheizung, Elektronenstrahlbedampfung, Sputtern (DC und AC) oder Lichtbogenbedampfung. Die Schichten können auch durch CVD aufgebracht werden, beispielsweise durch Sputtern im reaktiven Plasma oder eine andere plasmaunterstützte Bedampfungsart. Dielektrikumsschichten können beispielsweise auch aufgedruckt werden.

Die oben genannte Kombination eines erfindungsgemäßen diffusen Gitterbilds mit einem farbkippenden Dünnschichtaufbau ist sehr schwer zu fälschen, da die Technologien für die Herstellung der beiden Elemente nur schwer zu beschaffen sind. Darüber hinaus sind durch die Abstimmung der Farbeffekte der Gitterfelder des Gitterbilds und des Dünnschichtaufbaus neuartige visuelle Effekte möglich.

Die Erfindung umfasst ferner ein Sicherheitselement mit einem Gitterbild der oben beschriebenen Art. Das Sicherheitselement kann insbesondere ein Sicherheitsfaden, ein Etikett oder ein Transferelement sein. Die Erfindung umfasst auch ein Sicherheitspapier mit einem solchen Sicherheitselement sowie einen Datenträger, der mit einem Gitterbild, einem Sicherheitselement oder einem Sicherheitspapier der beschriebenen Art ausgestattet ist. Bei dem Datenträger kann es sich insbesondere um eine Banknote, ein Wertdokument, einen Pass, eine Ausweis- oder Kreditkarte oder eine Urkunde handeln. Das beschriebene Sicherheitselement, Sicherheitspapier oder der Datenträger kann zur Absicherung von Gegenständen beliebiger Art eingesetzt werden.

Ein diffuser Pumpeffekt kann auch dadurch erzeugt werden, dass jeweils im Grenzbereich zweier aneinandergrenzender schmaler Gitterfelder ein weiteres schmales Gitterfeld eingefügt wird, und dieses eingefügte Gitterfeld mit einem Gittermuster gefüllt wird, dessen Vorzugsrichtung (Azimutwinkel) zwischen den Vorzugsrichtungen der beiden ursprünglich aneinandergrenzenden Gitterfelder liegt. Sind die schmalen Gitterfelder fein genug, weisen sie also insbesondere eine Breite von etwa 50 μm bis 100 μm auf, und liegen die Vorzugsrichtungen der nach der Einfügung aneinandergrenzenden Gitterfelder nahe genug beisammen, so dass insbesondere die Winkeldifferenz zwischen erstem Gitterfeld, dem eingefügtem Gitterfeld und dem zweiten Gitterfeld jeweils zwischen 0,5° und 2° liegt, so sind die Ränder der schmalen Gitterfelder praktisch nicht mehr erkennbar und es entsteht ebenfalls ein diffuser Bildübergang.

Gegenstand der Erfindung ist weiter eine Prägeform zum Erzeugen einer Prägestruktur, mit einem vorzugsweise metallischen Hauptkörper mit einer Vielzahl von aneinandergrenzenden Gitterfeldern mit einem diffusem betrachtungswinkelabhängigen visuellen Erscheinungsbild, bei dem jedes Gitterfeld innerhalb seines Umrisses mit einem Gittermuster aus einer Vielzahl von geraden Strichgitterlinien gefüllt ist, wobei jedes Gittermuster eine Vorzugsrichtung aufweist, die einen Betrachtungswinkel festlegt, aus dem das jeweilige Gittermuster visuell erkennbar ist, und wobei zumindest zwei aneinandergrenzende Gitterfelder zumindest entlang ihres gemeinsamen Umrissbereichs jeweils einen nicht-glattrandigen Umriss aufweisen.

Die Prägeform stellt in der Regel die Negativform des in der Prägestruktur gewünschten erfindungsgemäßen Gitterbildes dar. Mithilfe der Prägeform wird das gewünschte Zielsubstrat, beispielsweise eine auf einer Folie aufgebrachte thermoplastische oder UV-härtbare Lackschicht, geprägt und so mit dem gewünschten Gitterbild versehen. Entsprechende Verfahren sind dem Fachmann bekannt und im Stand der Technik beschrieben.

Neben den bereits erwähnten Vorteilen der Erfindung, nämlich Gitterbilder mit neuen optischen Effekten zu schaffen und die Fälschungssicherheit der Gitterbilder gegenüber bekannten Gitterbildern weiter zu erhöhen, ist als ein wichtiger Vorteil noch zu erwähnen, dass die Datenaufbereitung zur Erzeugung erfindungsgemäßer Strukturen (Gitterbilder und Prägeformen) unter Einsatz geeigneter Computerprogramme zu einem großen Teil automatisiert erfolgen kann. D.h., bei einem vorgegebenen Design mit diffusem Pumpeffekt kann die bisher sehr zeitaufwendige Datenaufbereitung mit einer Vielzahl an manuellen Eingriffen gemäß der hier beschriebenen Erfindung sehr viel schneller und in überwiegend automatisierter Form erfolgen. Insbesondere bei Strukturen mit Gitterfeldern mit einer sehr hohen Flächenbelegung lassen sich die erfindungsgemäßen Strukturen (Gitterbilder und Prägeformen) sehr viel schneller berechnen und erzeugen als dies mit den bisher bekannten Techniken möglich war.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:

Fig. 1      eine schematische Darstellung einer Banknote mit einem erfindungsgemäßen Sicherheitselement,

Fig. 2      eine detailliertere Aufsicht auf das Sicherheitselement der Fig. 1,

Fig. 3      in (a) einen Ausschnitt eines herkömmlichen Gitterbilds mit Pumpeffekt und in (b) einen entsprechenden Ausschnitt aus einem erfindungsgemäßen Gitterbild,

Fig. 4    ein Gitterbild, bei dem die Gitterfelder entlang eines gemeinsamen Umrissbereichs Überlappungsbereiche mit einer Doppelbelegung aufweisen,

Fig. 5    einen allgemeinen, nicht-periodischen, nicht-glattrandigen Umrissverlauf, der durch eine mittlere Periodenlänge dP und eine mittlere Amplitude 2*dA charakterisiert ist,

Fig. 6    mehrere erfindungsgemäße Umrissverläufe,

Fig. 7    in (a) ein diffraktives Gittermuster, in (b) und (c) jeweils ein achromatisches Gittermuster und in (d) ein teils diffraktiv, teils matt wirkendes Gittermuster, und

Fig. 8    einen Querschnitt durch ein erfindungsgemäßes Sicherheitselement mit Dünnschichtaufbau.

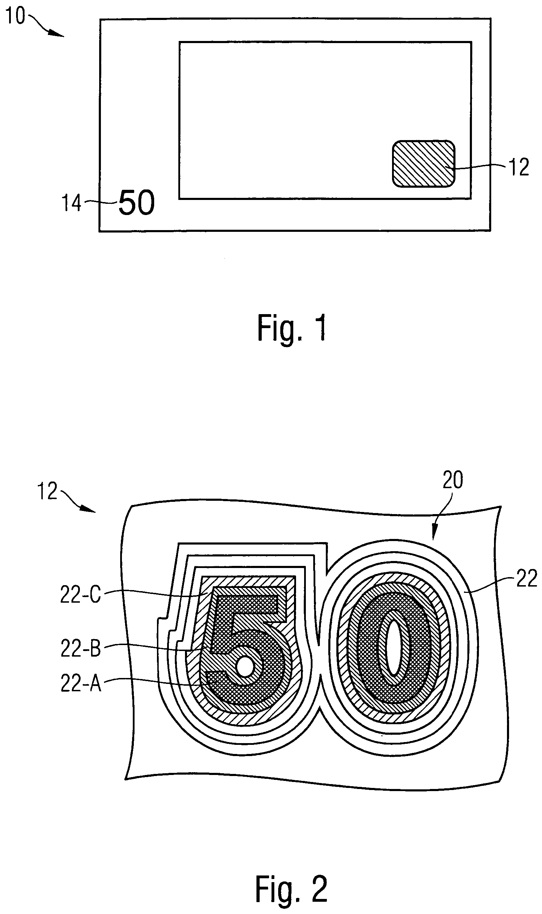

Die Erfindung wird nun am Beispiel von Sicherheitselementen für Banknoten erläutert. Fig. 1 zeigt dazu eine schematische Darstellung einer Banknote 10 mit einem erfindungsgemäßen Sicherheitselement 12, das ein Gitterbild mit einem diffusen Pumpeffekt enthält.

Im Ausführungsbeispiel der Fig. 1 ist das Sicherheitselement durch ein auf die Banknote aufgeklebtes Transferelement 12 gebildet. Die Erfindung ist allerdings nicht auf Transferelemente und auf Banknoten beschränkt, sondern kann überall eingesetzt werden, wo Gitterbilder zur Anwendung kommen können, beispielsweise bei Uhrenzifferblättern und Modeschmuck, bei Etiketten auf Waren und Verpackungen, bei Sicherheitselementen auf Dokumenten, Ausweisen, Pässen, Kreditkarten, Gesundheitskarten usw. Bei Banknoten und ähnlichen Dokumenten kommen außer Transferelementen beispielsweise auch Sicherheitsfäden und außer Aufsichtselementen auch Durchsichtselemente, wie Durchsichtsfenster, zur Ausstattung mit Gitterbildern infrage.

Wie in der detaillierteren Aufsicht der Fig. 2 dargestellt, enthält das Sicherheitselement 12 ein Gitterbild 20 mit einer Mehrzahl von aneinandergrenzenden Gitterfeldern 22, von denen drei Gitterfelder 22-A, 22-B, 22-C für die weitere Erläuterung mit verschiedenen Schraffuren hervorgehoben sind.

Das Gitterfeld 22-A bildet durch seine Form die Ziffernfolge "50", die zugleich die Denomination 14 der Banknote 10 (Fig. 1) darstellt. Die angrenzenden Gitterfelder 22-B, 22-C und die weiteren in Fig. 2 nicht schraffierten Gitterfelder 22 folgen jeweils konzentrisch den Konturen der Ziffernfolge "50" des Gitterfelds 22-A.

Jedes der Gitterfelder 22 ist innerhalb seines Umrisses mit einem Gittermuster gefüllt, das eine Vorzugsrichtung aufweist, die einen Betrachtungswinkel festlegt, in den das jeweilige Gittermuster das einfallende Licht beugt oder streut. Beispielsweise ist bei senkrecht einfallendem Licht das Gitterfeld 22-A unter einem schrägen Betrachtungswinkel von 45° gelb leuchtend sichtbar, das Gitterfeld 22-B unter einem schrägen Betrachtungswinkel von 40° orange leuchtend und das Gitterfeld 22-C unter einem schrägen Betrachtungswinkel von 35° rot leuchtend.

Im Ausführungsbeispiel sind die Vorzugsrichtungen der zugeordneten Gittermuster benachbarter Gitterfelder 22 in an sich bekannter Weise so aufeinander abgestimmt, dass sie beim Kippen des Sicherheitselements nacheinander Licht zum Auge des Betrachters lenken. Für den Betrachter ergibt sich dadurch beim Kippen ein Pumpeffekt, bei dem sich der Umriss der Ziffernfolge "50" je nach Kipprichtung vergrößert oder verkleinert.

Im Unterschied zu herkömmlichen Gestaltungen sind die aneinandergrenzenden Gitterfelder 22 bei der vorliegenden Erfindung jeweils entlang ihres gemeinsamen Umrissbereichs in der nachfolgend genauer beschriebenen Weise auf einer unterhalb der Auflösungsschwelle des bloßen Auges liegenden Skala mit einem nicht-glattrandigen Umriss versehen.

Die Umrisse der Gitterfelder werden durch die Maßnahme optisch aufgelöst und die Gitterfelder verlaufen in ihren Randbereichen ineinander. Dadurch wird erreicht, dass ein Betrachter aus einer bestimmten Betrachtungsrichtung nicht nur das Gittermuster des jeweils dominierenden Gitterfelds 22 sieht, sondern dass er zu einem gewissen Anteil auch die Gittermuster der angrenzenden Gitterfelder wahrnimmt. Beispielsweise sieht der Betrachter bei dem Ausführungsbeispiel der Fig. 2 bei einem schrägen Betrachtungswinkel von 40° nicht nur das Gitterfeld 22-B orange aufleuchten, sondern er sieht im Randbereich des Gitterfelds 22-B auch einen kleinen Anteil des Gitterfelds 22-A gelb aufleuchten und am gegenüberliegenden Rand einen kleinen Anteil des Gitterfelds 22-C rot aufleuchten.

Durch diese Beimischung kleiner Anteile der Gittermuster benachbarter Gitterfelder erscheint der Pumpeffekt dem Betrachter mit einem kontinuierlichen und weichen ("diffusen") Bildübergang, der im Gegensatz zu dem sprunghaften und scharfen Übergang herkömmlicher Gitterbilder mit glattrandig und damit scharf begrenzten Gitterfeldern steht.

Darüber hinaus weisen die diffusen Pumpbilder eine erhöhte Fälschungssicherheit auf, da sie weder mittels der verbreiteten klassischen optischen Direktbelichtung noch mit den ebenfalls gebräuchlichen Dot-Matrix-Maschinen nachgestellt werden können, beispielsweise bei nur wenigen Werten für Azimutwinkel/Gitterkonstante. Für die ebenfalls beschriebenen Mattstrukturen sind die beiden oben genannten Techniken gar nicht einsetzbar. Im Ergebnis können die erfindungsgemäßen Sicherheitselemente mittels Elektronenstrahltechniken somit mit einer aus dem Stand der Technik nicht ansatzweise erreichten optischen Brillanz hergestellt werden.

Als weitere Vorteile können neben der bereits genannten erhöhten Fälschungssicherheit die sehr gute Kombinierbarkeit der erfindungsgemäßen Gitterbilder mit beliebigen anders ausgebildeten und andere diffraktive Effekte aufweisenden Gitterbildern, sowie die Angabe eines neuartigen, für den Betrachter aufgrund des weichen Übergangs visuell ansprechenden optischen Effekts genannt werden.

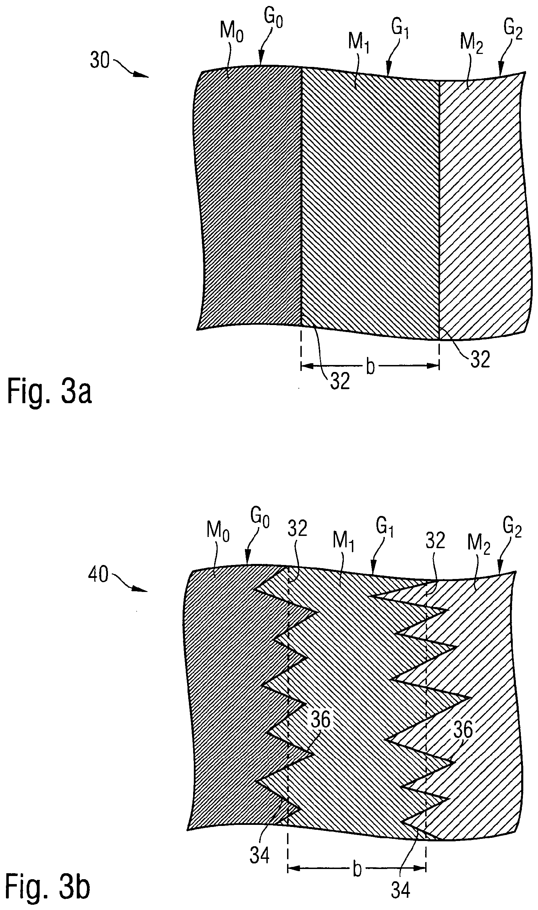

Zur Veranschaulichung des Vorgehens bei der Aufbereitung der Umrisse der Gitterfelder zeigt Fig. 3(a) einen Ausschnitt eines herkömmlichen Gitterbilds 30 mit Pumpeffekt. Das Gitterbild 30 enthält eine einfache Abfolge nebeneinander liegender Gitterfelder $G_i$, von denen im gezeigten Ausschnitt die mit $G_0$, $G_1$ und $G_2$ bezeichneten Gitterfelder dargestellt sind. Jedem Gitterfeld $G_i$ ist ein Gittermuster Mi mit einer Vorzugsrichtung zugeordnet, die den Betrachtungswinkel festlegt, in den das jeweilige Gittermuster beugt oder streut, so dass es von dieser Betrachtungsrichtung aus gesehen farbig oder silbrig matt in Erscheinung tritt.

Bei einem herkömmlichen Pumpbild sind die Umrisse 32 der Gitterfelder $G_i$ glatt und typischerweise geradlinig ausgebildet, wie in Fig. 3(a) gezeigt. Beim Kippen des Pumpbilds ergibt sich so ein scharfer Übergang zwischen den Sichtbarkeitsbereichen der verschiedenen Gitterfelder $G_i$.

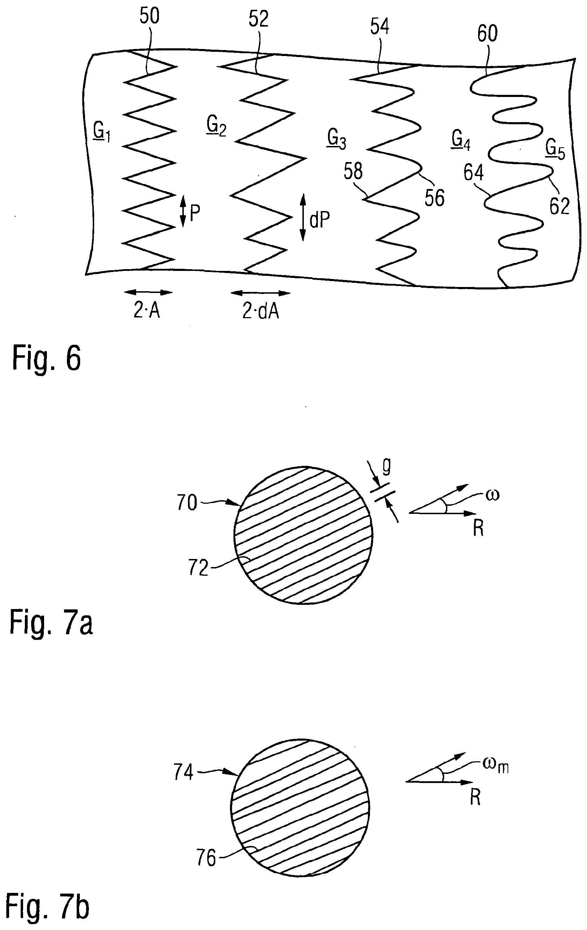

Um nun einen kontinuierlichen und weichen Bildübergang und damit einen diffusen Pumpeffekt zu erzeugen, ist bei dem erfindungsgemäßen Gitterbild 40 der Fig. 3(b) der Umriss 34 der aneinandergrenzenden Gitterfelder $G_i$ jeweils entlang des gemeinsamen Umrissbereichs nicht-glattrandig gestaltet. Im gezeigten Ausführungsbeispiel weisen der rechte Rand des Gitterfelds $G_0$, der linke und der rechte Rand des Gitterfelds $G_1$ und der linke Rand des Gitterfelds $G_2$ jeweils eine Sägezahnstruktur mit einer Vielzahl von feinen Zacken 36 auf, deren Größe und Abstand unterhalb der Auslösungsgrenze des menschlichen Auges liegt. Ein entsprechender glatter Randverlauf 32 eines herkömmlichen Gitterfelds, der sich aus dem erfindungsgemäßen nicht-glattrandigen Umrissverlauf 34 durch Mittelung über eine Strecke von einigen Millimetern ergibt, ist zur Veranschaulichung gestrichelt eingezeichnet. Es versteht sich, dass die gezeigte Sägezahnstruktur nur ein Beispiel für einen nicht-glattrandig Umrissbereich darstellt und dass auch andere Umrissgestaltungen infrage kommen, wie insbesondere im Zusammenhang mit Fig. 6 genauer erläutert.

Obwohl das Gitterfeld $G_1$ der Fig. 3(b) dieselbe Gesamtfläche wie das Gitterfeld $G_1$ der Fig. 3(a) aufweist, verläuft das Gitterfeld $G_1$ wegen seiner sägezahnartigen Umrissgestaltung in die benachbarten Gitterfelder $G_0$ und $G_2$. In gleicher Weise verläuft das Gitterfeld $G_0$ in die benachbarten Gitterfelder $G_{-1}$ und $G_1$, das Gitterfeld $G_2$ in die benachbarten Gitterfelder $G_1$ und $G_3$, und so weiter. Dadurch weist jedes Gitterfeld $G_i$ zu seinem Rand 32 bzw. 34 hin eine kontinuierlich geringer werdende Flächenbelegung mit dem zugehörigen Gittermuster Mi auf, während der Anteil des Nachbar-Gittermuster $M_{i+1}$ bzw. $M_{i-1}$ kontinuierlich zunimmt. Beim Kippen des Pumpbilds 40 ergibt sich so ein weicher, fließender Übergang zwischen den Sichtbarkeitsbereichen der verschiedenen Gitterfelder $G_i$.

Beim Ausführungsbeispiel der Fig. 3(b) weisen benachbarte Gitterfelder entlang ihres gemeinsamen Umrissbereichs jeweils denselben Sägezahnverlauf 34 auf, so dass das Gitterfeld $G_0$ nahtlos und ohne Überlapp an das Gitterfeld $G_1$ angrenzt, das Gitterfeld $G_1$ nahtlos und ohne Überlapp an das Gitterfeld $G_2$ angrenzt, und so weiter.

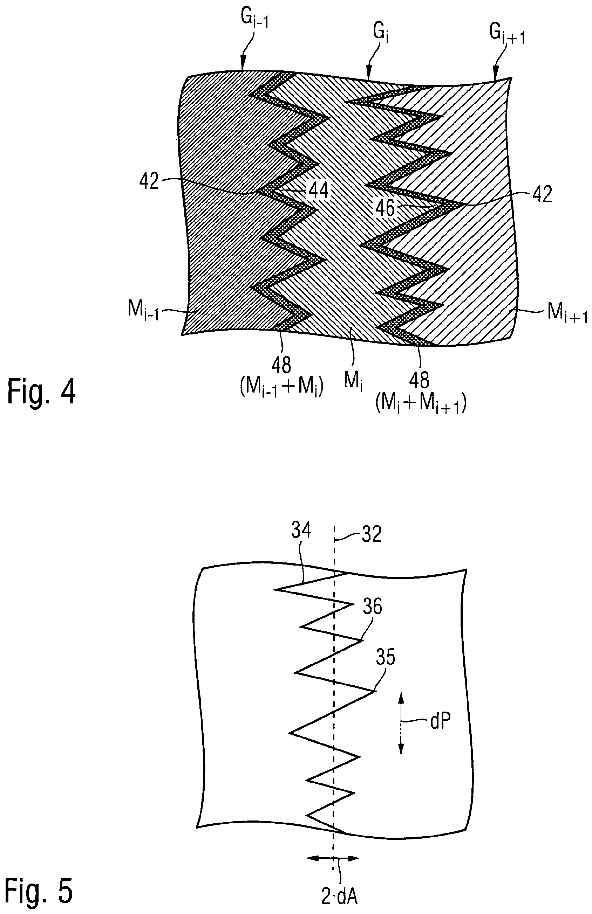

Wie in Fig. 4 illustriert, ist es jedoch auch möglich, dass die nach außen weisenden Spitzen 42 der Zacken eines Gitterfelds $G_i$ weiter als bis zu den nach innen weisenden Spitzen 44 bzw. 46 der Zacken der Nachbar-Gitterfelder $G_{i-1}$ bzw. $G_{i+1}$ reichen, so dass sich entlang des gemeinsamen Umrissbereichs benachbarter Gitterfelder Überlappungsbereiche 48 mit einer Doppelbelegung mit den Gittermustern $M_i$ und $M_{i-1}$ bzw. $M_i$ und $M_{i+1}$ ergeben. Wenngleich Ausführungsformen gemäß Fig. 4 mit Überlappungsbereichen und einer Doppelbelegung mit Gittermustern im Einzelfall mit Vorteil Verwendung finden, sind sie gegenwärtig aber nicht bevorzugt.

Die Zacken 36 des Sägezahnverlaufs 34 der Fig. 3(b) müssen weder symmetrisch sein, noch müssen die lokalen Abweichungen von einem glatten Randverlauf 32 gleiche Amplitude haben. Mit Bezug auf Fig. 5 ist im allgemeinen Fall der Umrissverlauf 34 vielmehr durch eine mittlere Periodenlänge dP und eine mittlere Amplitude 2*dA charakterisiert. Die Abweichungen des Sägezahnverlaufs 34 von dem entsprechenden glatten Randverlauf 32 liegen dabei mit Vorteil unterhalb der Auflösungsgrenze des bloßen Auges.

Beispielsweise kann die mittlere Periodenlänge dP = 80 $\mu$m betragen, und die lokale Periodenlänge, also der Abstand zwischen zwei benachbarten Zackenspitzen, zufällig zwischen 60 und 100 $\mu$m gewählt werden.

Bei der Wahl der mittleren Amplitude 2*dA wird auch die Breite b der Gitterfelder $G_i$ (Fig. 3) berücksichtigt. Die lokalen Amplituden können alle gleich sein, bevorzugt ist jedoch eine zufällige Variation um den gewünschten Mittelwert. Die lokale Amplitude $A_{loc}$ ist dabei jeweils der Abstand einer Zackenspitze 35 zur Basislinie, also dem gemittelten glatten Randverlauf 32. Sie ergibt sich als Summe aus einem konstanten Anteil fA und einem variablen Anteil rA, der zufällig zwischen 0 und einem Maximalwert vA schwankt. Der Mittelwert des variablen Anteils ist dann vA/2, so dass die mittlere Amplitude dA gegeben ist durch

$$dA = fA + vA/2.$$

Vorteilhaft wird dabei eine maximale Amplitude maxA vorgegeben und auf einen konstanten Anteil fA und einen maximalen variablen Anteil vA verteilt, vorzugsweise mit einem größeren konstanten Anteil. Beispielsweise kann maxA = ¾ fA + ¼ vA gewählt werden.

Haben die aneinandergrenzenden Gitterfelder unterschiedliche Breite, beispielsweise das Gitterfeld $G_1$ eine Breite von $b_1 = 100$ μm und das Gitterfeld $G_2$ eine Breite von $b_2 = 140$ μm, so können sich die Zacken ausgehend von einem glatten Randverlauf 32 entsprechend weiter in das breitere Gitterfeld $G_2$ erstrecken.

Zur Illustration der erfindungsgemäß infrage kommenden Umrissverläufe zeigt Fig. 6 zunächst noch mit Sägezahnform einen periodischen, nicht-glattrandigen Umrissbereich 50 zwischen zwei Gitterfeldern $G_1$ und $G_2$, sowie einen nicht-periodischen, nicht-glattrandigen Umrissbereich 52 zwischen zwei Gitterfeldern $G_2$ und $G_3$. Bei dem periodischen, nicht-glattrandigen Umrissverlauf 50 ist die Abweichung von einem glatten Randverlauf gleichförmig und kann durch eine Periodenlänge P und eine Amplitude 2*A beschrieben werden. Der nicht-periodische, nicht-glattrandige Umrissverlauf 52 kann, wie oben angegeben, durch eine mittlere Periodenlänge dP und eine mittlere Amplitude 2*dA beschrieben werden.

Neben den bisher gezeigten Sägezahnstrukturen kommen erfindungsgemäß selbstverständlich auch andere Umrissgestaltungen infrage. Beispielsweise kann der Umrissbereich 54 zwischen zwei Gitterfeldern $G_3$ und $G_4$ gekerbt sein, also runde Vorsprünge 56 und spitz zulaufende Einschnitte 58 aufweisen, oder gezähnt, also spitze Vorsprünge und runde Einschnitte aufweisen. Wie aus Fig. 6 unmittelbar ersichtlich, ist der Umrissbereich 54 aus Sicht des Gitterfelds $G_3$ gekerbt und aus Sicht des Gitterfelds $G_4$ gezähnt.

Durch die Verwendung gekerbter bzw. gezähnter Umrissverläufe kann ein weiteres verstecktes Echtheitskennzeichen in das Gitterbild integriert werden. Beispielsweise kann für das Design der Fig. 2 vorsehen sein, dass die Umrissverläufe der Gitterfelder 22 bei geradzahligen Seriennummern von innen nach außen gesehen gekerbt und für ungeradzahlige Seriennummern gezähnt ausgebildet werden. Obwohl die Gitterfelder dann jeweils denselben visuellen Eindruck erzeugen, kann die Zuordnung von Umrissverlauf und Seriennummer mit einer starken Lupe oder einem Mikroskop überprüft werden. In derselben Weise können auch andere unterschiedliche Umrissverläufe als Echtheitsmerkmal höherer Stufe eingesetzt werden und nicht nur mit der Seriennummer, sondern auch mit beliebigen anderen Merkmalen eines Sicherheits- oder Wertdokuments korreliert sein.

Zurückkommend auf die Darstellung der Fig. 6 weist der Umrissbereich 60 zwischen den Gitterfeldern $G_4$ und $G_5$ runde Vorsprünge 62 und runde Einschnitte 64 auf. Ein solcher Umrissbereich 60 wird je nach der Reichweite der Strukturen in das Nachbar-Gitterfeld hinein als gelappt, gebuchtet oder gewellt bezeichnet, wie oben bereits genauer ausgeführt. Im Ausführungsbeispiel ist der Umrissbereich 60 gebuchtet, da die Vorsprünge 62 und Einschnitte 64 im Mittel jeweils etwa 15% der Breite der Nachbar-Gitterfelder $G_5$ (Vorsprünge 62) bzw. $G_4$ (Einschnitte 64) in diese hineinragen.

Die Gittermuster $M_i$ der Gitterfelder $G_1$ können

sowohl durch diffraktive Gittermuster als auch durch achromatische Gittermuster gebildet sein. Fig. 7(a) zeigt dazu ein diffraktives Gittermuster 70, das parallele Strichgitterlinien 72 enthält, die durch die Gitterlinien-Parameter Beabstandung, Winkelorientierung und Profilierung charakterisiert sind. Der Parameter Winkelorientierung gibt dabei die azimutale Orientierung der einzelnen Gitterlinien 72 eines Gittermusters 70 an, die beispielsweise durch einen Winkel ω bezogen auf eine Referenzrichtung R ausgedrückt werden kann. Der Parameter "Beabstandung" gibt den Abstand benachbarter Gitterlinien 72 an, der beispielsweise durch eine Gitterkonstante g ausgedrückt werden kann, und der Parameter "Profilierung" beschreibt das Linienprofil der Gitterlinien 72, beispielsweise ein sinusförmiges, sägezahnartiges oder geblaztes Linienprofil.

Die Winkelorientierung der Gitterlinien 72 bestimmt denjenigen Betrachtungswinkel, aus dem das Gittermuster 70 visuell erkennbar ist, während die Beabstandung der Gitterlinien die Farbe festlegt, in der das Gittermuster 70 aus diesem Betrachtungswinkel erscheint. Durch die Profilierung der Gitterlinien 72 kann eine symmetrische Beugung (gleiche Anteile in die positiven und negativen Beugungsordnungen) oder eine asymmetrische Beugung mit besonders hoher Beugungseffizienz in bestimmte Beugungsordnungen eingestellt werden.

Fig. 7(b) zeigt ein achromatisches Gittermuster 74, das zwar ebenfalls ein betrachtungswinkelabhängiges, jedoch nicht-farbiges, sondern silbrig-mattes Erscheinungsbild zeigt. Die Gitterlinien 76 des achromatischen Gittermusters 74 sind zunächst ebenfalls durch die Gitterlinien-Parameter Orientierung, Beabstandung und Profilierung gegeben, allerdings variiert zumindest einer der Gitterlinien-Parameter Orientierung, Beabstandung und Profilierung mit einer vorgegebenen Streuung zufällig, so dass das Gittermuster 74 insgesamt durch die Gittermuster-Parameter mittlere Orientierung, Orientierungsstreuung, mittlere Beabstandung, Beabstandungsstreuung, Profilierung und Profilierungsstreuung der Gitterlinien charakterisiert ist. Eine zufällige Variation bedeutet dabei, dass der entsprechende Parameter einer bestimmten Wahrscheinlichkeitsfunktion oder Dichtefunktion gehorcht, wie oben genauer erläutert.

Der Wert des Parameters "mittlere Orientierung" legt eine Vorzugsrichtung des jeweiligen Gittermusters 74 fest, die zusammen mit den Werten der weiteren Parameter einen Betrachtungsbereich bestimmt, aus dem das Gittermuster 74 visuell in Erscheinung tritt. Der Betrachtungsbereich kann beispielsweise durch einen Winkelbereich von +/-10° um eine Vorzugsbetrachtungsrichtung gegeben sein. Wie oben bereits erläutert, bildet das Gittermuster durch die zufällige Variation zumindest eines der Gittermuster-Parameter keine diffraktive Struktur, sondern eine Mattstruktur, bei der nicht diffraktive, sondern achromatische Streueffekte das visuelle Erscheinungsbild dominieren, so dass das Gittermuster für den Betrachter im Wesentlichen ein nicht-farbiges, silbrig-mattes Erscheinungsbild erzeugt.

Zur Illustration sind bei dem Gittermuster 74 der Fig. 7(b) Gitterlinien 76 gezeigt, deren Orientierungen mit einer Orientierungsstreuung von $\Delta\omega = 2°$ zufällig um eine mittlere Orientierung $\omega_m$ bezogen auf die Referenzrichtung R schwanken.

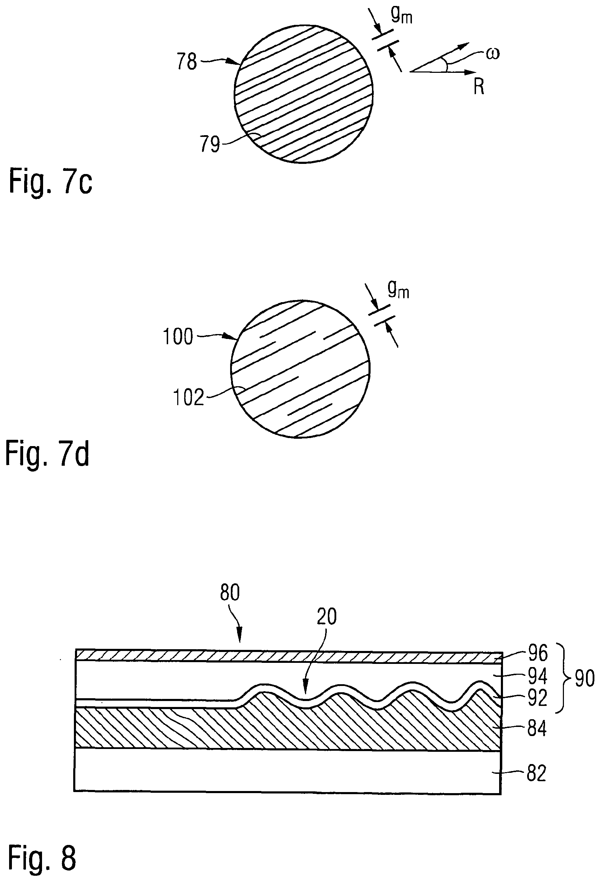

Eine weitere Möglichkeit, ein achromatisches Gittermuster mit einer Vorzugsrichtung zu erzeugen, besteht mit Bezug auf Fig. 7(c) darin, dass bei einem Gittermuster 78 nur der Parameter Beabstandung der Strichgitterlinien 79 über die Fläche des Gittermusters 78 willkürlich zufällig variiert und die anderen charakteristischen Parameter konstant gehalten werden. Die Beabstandung ist dann durch eine mittlere Beabstandung $g_m$ und eine Beabstandungsstreuung $\Delta g$ gegeben. Eine solche willkürlich zufällige Beabstandung kann beispielsweise durch aufeinanderfolgendes Belichten mehrerer Gitter gleicher Orientierung, aber unterschiedlicher Gitterkonstante erhalten werden. Die dadurch gezielt eingebrachte Unordnung erzeugt eine achromatisch streuende Gitterstruktur mit silbrig-mattem Erscheinungsbild. Gleichzeitig weist die Gitterstruktur aufgrund der parallelen Gitterlinien eine Vorzugsrichtung für die Streuung auf und führt so insgesamt zu einem betrachtungswinkelabhängigen, nicht-farbigen visuellen Erscheinungsbild.

Die Gestaltung der Fig. 7(d) erzeugt ein halbmatt wirkendes Erscheinungsbild, also eine teils diffraktiv und teils matt wirkende Erscheinung. Dazu enthält das Gittermuster 100 verschieden lange Strichgitterlinien 102, deren Beabstandung wie bei Fig. 7(c) zufällig variiert und durch eine mittlere Beabstandung $g_m$ und eine Beabstandungsstreuung $\Delta g$ gegeben ist. Die in Fig. 7(d) gezeigte Ausführungsform mit teils diffraktiv und teils matt wirkender Erscheinung lässt sich mit besonders großem Vorteil elektronenstrahllithograpisch in einem sogenannten "Fast Grating Mode" (FGM) erzeugen. Bei einem solchen Modus wird beispielsweise der in Fig. 3 gezeigte Streifen $G_1$ nochmals in mehrere Teilstreifen unterteilt und das gesamte Gitterfeld $G_1$ durch Vorsehung von entsprechenden geraden Strichgitterlinien in den Teilstreifen gebildet. Wie aus Fig. 7(d) ersichtlich ist, sind die Strichgitterlinien 102 im Schnitt kürzer als die beispielsweise in Fig. 7(a) gezeigten Strichgitterlinien 72, die zu einem diffraktiven Gittermuster 70 korrespondieren. Daher eignet sich die in Fig. 7(d) gezeigte Ausführungsform in besonderem Maße für den vorstehend beschriebenen FGM-Modus, wodurch der bereits erwähnte Vorteil der Erfindung, eine gegenüber dem Stand der Technik schnellere Datenaufbereitung zur Erzeugung der erfindungsgemäßen Strukturen, bei der Ausführungsform gemäß Fig. 7(d) in besonderem Maße in Erscheinung tritt. Selbstverständlich können aber auch die in Fig. 7(a) bis (c) gezeigten Gittermuster im FGM-Modus erzeugt werden.

In einer bevorzugten Ausgestaltung ist ein erfindungsgemäßes Gitterbild mit einem weiteren Sicherheitsmerkmal, insbesondere einer farbkippenden Dünnschichtanordnung oder einer hochbrechenden Schicht kombiniert. Fig. 8 zeigt dazu im Querschnitt ein Sicherheitselement 80 mit einem Gitterbild 20 der in Fig. 2 gezeigten Art. Das Sicherheitselement 80 enthält ein transparentes Folienmaterial 82 mit einer Lackschicht 84, in die das Gitterbild 20 eingeprägt ist. Darüber ist ein vollflächiger Dünnschichtaufbau 90 aufgedampft, der im Ausführungsbeispiel aus einer Absorberschicht 92, einer hochbrechenden dielektrischen Schicht 94 und einer reflektierenden Schicht 96 besteht. Die Schichten des Dünnschichtaufbaus 90 wurden dabei im Vakuumdampfverfahren aufgebracht.

Je nach der gewünschten späteren Anordnung des Sicherheitselements 80 auf einem Datenträger kann die Schichtenfolge des Dünnschichtaufbaus 90 variiert werden. Beispielsweise kann auf dem Gitterbild 20 auch zuerst eine reflektierende Schicht, dann eine hochbrechende dielektrische Schicht und darüber eine Absorberschicht aufgebracht sein. Die Kombination eines erfindungsgemäßen Gitterbilds 20 mit einem Dünnschichtaufbau 90 verbindet die Farbwirkung des Gitterbilds mit dem Farbkippeffekt des Dünnschichtaufbaus und erlaubt so besonders ansprechende Farbeffekte. Gleichzeitig wird durch die Wechselwirkung der beiden Farbwirkungen die Fälschungssicherheit des Sicherheitselements erhöht.

Bezugszeichenliste

| | |
|---|---|
| 10 | Banknote |
| 12 | Sicherheitselement |
| 14 | Denomination |
| 20 | Gitterbild |
| 22 | Gitterfelder |
| 22-A, 22-B, 22-C | Gitterfelder |
| 30 | Gitterbild |
| 32 | glattrandiger Umriss |
| 34 | nicht-glattrandiger Umriss |
| 36 | Zacken |
| 40 | Gitterbild |
| 42 | nach außen weisende Spitzen |
| 44, 46 | nach innen weisende Spitzen |
| 48 | Überlappungsbereiche |
| 50,52,54 | Umrissbereiche |
| 56 | runde Vorsprünge |
| 58 | spitz zulaufende Einschnitte |
| 60 | Umrissbereiche |
| 62 | runde Vorsprünge |
| 64 | runde Einschnitte |
| 70 | diffraktives Gittermuster |
| 72 | Strichgitterlinien |
| 74 | achromatisches Gittermuster |
| 76 | Gitterlinien |
| 78 | Gittermuster |
| 79 | Gitterlinien |
| 80 | Sicherheitselement |
| 82 | Folienmaterial |

| 84 | Lackschicht |
| 90 | Dünnschichtaufbau |
| 92 | Absorberschicht |
| 94 | dielektrische Schicht |
| 96 | reflektierende Schicht |
| 100 | Gittermuster |
| 102 | Gitterlinien |
| $G_i$ | Gitterfelder |
| $M_i$ | Gittermuster |

**Patentansprüche**

1. Gitterbild (40) mit einer Vielzahl von aneinandergrenzenden Gitterfeldern ($G_0$, $G_1$, $G_2$) mit einem betrachtungswinkelabhängigen visuellen Erscheinungsbild, bei dem jedes Gitterfeld ($G_0$, $G_1$, $G_2$) innerhalb seines Umrisses mit einem Gittermuster ($M_0$, $M_1$, $M_2$) aus einer Vielzahl von geraden Strichgitterlinien gefüllt ist, wobei jedes Gittermuster ($M_0$, $M_1$, $M_2$) eine Vorzugsrichtung aufweist, die einen Betrachtungswinkel festlegt, aus dem das jeweilige Gittermuster ($M_0$, $M_1$, $M_2$) visuell erkennbar ist,

   **dadurch gekennzeichnet, dass** zumindest zwei aneinandergrenzende Gitterfelder ($G_1$, $G_2$) zumindest entlang ihres gemeinsamen Umrissbereichs jeweils einen nicht-glattrandigen Umriss (34) aufweisen, nämlich einen Umriss (34), der gesägt, gekerbt, gezähnt, gelappt, gebuchtet, gewellt, gezackt, oder in Form einer fraktalen Kurve ausgebildet ist, und dass die Abweichungen des nicht-glattrandigen Umrisses (34) von einem gemittelten, glatten Randverlauf (32), welcher sich durch eine abschnittsweise Mittelung des nicht-glattrandigen Umrisses (34) über eine größere Strecke von einem Millimeter ergibt und dem globalen Umriss des Gitterfelds aus einem Betrachtungsabstand von etwa 30 cm entspricht, periodisch sind, wobei die Periodenlänge unterhalb von 300 $\mu$m liegt, oder dass die Abweichungen des nicht-glattrandigen Umrisses (34) von einem gemittelten, glatten Randverlauf (32), welcher sich durch eine abschnittsweise Mittelung des nicht-glattrandigen Umrisses (34) über eine größere Strecke von einem Millimeter ergibt und dem globalen Umriss des Gitterfelds aus einem Betrachtungsabstand von etwa 30 cm entspricht, nicht gleichförmig sind und eine mittlere Periodenlänge aufweisen, die unterhalb von 300 $\mu$m liegt, und wobei die Amplitude der Abweichungen des nicht-glattrandigen Umrisses (34) von einem gemittelten, glatten Randverlauf (32) zwischen 10% und 90%, vorzugsweise zwischen 25% und 75% der Breite der beteiligten Gitterfelder beträgt.

2. Gitterbild nach Anspruch 1, **dadurch gekennzeichnet, dass** die aneinandergrenzenden Gitterfelder ($G_1$, $G_2$) entlang ihres gemeinsamen Umrissbereichs ineinander verlaufen.

3. Gitterbild nach wenigstens einem der Ansprüche 1 bis 2, **dadurch gekennzeichnet, dass** die aneinandergrenzenden Gitterfelder ($G_1$, $G_2$) entlang ihres gemeinsamen Umrissbereichs jeweils denselben nicht-glattrandigen Umriss aufweisen, oder dass zumindest eines der aneinandergrenzenden Gitterfelder entlang des gemeinsamen Umrissbereichs in einem Überlappungsbereich eine Doppelbelegung mit seinem eigenen Gittermuster und dem Gittermuster des angrenzenden Gitterfelds aufweist.

4. Gitterbild nach wenigstens einem der Ansprüche 1 bis 3, **dadurch gekennzeichnet, dass** die Gitterfelder ($G_0$, $G_1$, $G_2$) eine lang gestreckte Form mit einer Längsrichtung und einer Querrichtung aufweisen, und vorzugsweise in Form von Streifen, Ringen oder in einer der Kontur eines vorgegebenen Motivs folgenden Form ausgebildet sind, wobei die Gitterfelder in Querrichtung vorzugsweise eine Breite unterhalb von 2 mm, bevorzugt unterhalb von 1 mm, besonders bevorzugt zwischen 50 $\mu$m und 500 $\mu$m aufweisen.

5. Gitterbild nach wenigstens einem der Ansprüche 1 bis 4, **dadurch gekennzeichnet, dass** die Abweichungen des nicht-glattrandigen Umrisses (34) von einem gemittelten, glatten Randverlauf (32) unterhalb der Auflösungsgrenze des bloßen Auges liegen.

6. Gitterbild nach wenigstens einem der Ansprüche 1 bis 5, **dadurch gekennzeichnet, dass** die Abweichungen des nicht-glattrandigen Umrisses (34) von einem gemittelten, glatten Randverlauf (32) periodisch sind, wobei die Periodenlänge unterhalb von 200 $\mu$m, bevorzugt zwischen 10 $\mu$m und 100 $\mu$m liegt, oder dass die Abweichungen des nicht-glattrandigen Umrisses (34) von einem gemittelten, glatten Randverlauf (32) nicht gleichförmig sind und eine mittlere Periodenlänge aufweisen, die unterhalb von 200 $\mu$m, bevorzugt zwischen 10 $\mu$m und 100 $\mu$m liegt.

7. Gitterbild nach wenigstens einem der Ansprüche 1 bis 6, **dadurch gekennzeichnet, dass** die Gittermuster ($M_0$, $M_1$, $M_2$) diffraktive Gittermuster umfassen, die parallele, äquidistante Strichgitterlinien enthalten, die durch die Gitterlinien-Parameter Beabstandung, Winkelorientierung und Profilierung charakterisiert sind, und wobei die Gittermuster aus dem durch die Vorzugsrichtung festgelegten Betrachtungswinkel mit einem farbigen Erscheinungsbild visuell erkennbar sind.

8. Gitterbild nach wenigstens einem der Ansprüche 1 bis 7, **dadurch gekennzeichnet, dass** die Gittermuster ($M_0$, $M_1$, $M_2$) achromatische Gittermuster umfassen, die aus dem durch die Vorzugsrichtung festgelegten Betrachtungswinkel mit einem matten, vorzugsweise silbrigen Erscheinungsbild visuell erkennbar sind, wobei die Strichgitterlinien der achromatischen Gittermuster bevorzugt durch die Gitterlinien-Parameter Orientierung, Beabstandung und Profilierung charakterisiert sind, und in jedem der achromatischen Gittermuster zumindest einer dieser Gitterlinien-Parameter mit einer vorgegebenen Streuung zufällig variiert, so dass die achromatischen Gittermuster jeweils durch die Gittermuster-Parameter mittlere Orientierung, Orientierungsstreuung, mittlere Beabstandung, Beabstandungsstreuung, Profilierung und Profilierungsstreuung charakterisiert sind.

9. Gitterbild nach wenigstens einem der Ansprüche 1 bis 8, **dadurch gekennzeichnet, dass** sich die Vorzugsrichtungen der Gittermuster aneinandergrenzender Gitterfelder um 0,5° bis 10°, vorzugsweise um 2° bis 3° unterscheiden.

10. Verfahren zum Herstellen eines Gitterbilds (40), bei dem

    - in einem Substrat eine Vielzahl von aneinandergrenzenden Gitterfeldern ($G_0$, $G_1$, $G_2$) mit einem betrachtungswinkelabhängigen visuellen Erscheinungsbild erzeugt werden, indem
    - jedes Gitterfeld ($G_0$, $G_1$, $G_2$) innerhalb seines Umrisses mit einem Gittermuster ($M_0$, $M_1$, $M_2$) aus einer Vielzahl von geraden Strichgitterlinien gefüllt wird, wobei jedes Gittermuster ($M_0$, $M_1$, $M_2$) eine Vorzugsrichtung aufweist, die einen Betrachtungswinkel festlegt, aus dem das jeweilige Gittermuster ($M_0$, $M_1$, $M_2$) visuell erkennbar ist,
    **dadurch gekennzeichnet, dass**
    - zumindest zwei aneinandergrenzende Gitterfelder ($G_1$, $G_2$) entlang ihres gemeinsamen Umrissbereichs jeweils mit einem nicht-glattrandigen Umriss (34) versehen werden, nämlich einen Umriss (34), der gesägt, gekerbt, gezähnt, gelappt, gebuchtet, gewellt, gezackt, oder in Form einer fraktalen Kurve ausgebildet ist, wobei die Gittermuster ($M_0$, $M_1$, $M_2$) vorzugsweise elektronenstrahllithographisch erzeugt werden, und
    - dass die Abweichungen des nicht-glattrandigen Umrisses (34) von einem gemittelten, glatten Randverlauf (32), welcher sich durch eine abschnittsweise Mittelung des nicht-glattrandigen Umrisses (34) über eine größere Strecke von einem Millimeter ergibt und dem globalen Umriss des Gitterfelds aus einem Betrachtungsabstand von etwa 30 cm entspricht, periodisch sind, wobei die Periodenlänge unterhalb von 300 $\mu$m liegt, oder dass die Abweichungen des nicht-glattrandigen Umrisses (34) von einem gemittelten, glatten Randverlauf (32), welcher sich durch eine abschnittsweise Mittelung des nicht-glattrandigen Umrisses (34) über eine größere Strecke von einem Millimeter ergibt und dem globalen Umriss des Gitterfelds aus einem Betrachtungsabstand von etwa 30 cm entspricht, nicht gleichförmig sind und eine mittlere Periodenlänge aufweisen, die unterhalb von 300 $\mu$m liegt, und wobei die Amplitude der Abweichungen des nicht-glattrandigen Umrisses (34) von einem gemittelten, glatten Randverlauf (32) zwischen 10% und 90%, vorzugsweise zwischen 25 % und 75% der Breite der beteiligten Gitterfelder beträgt.

11. Sicherheitselement mit einem Gitterbild nach wenigstens einem der Ansprüche 1 bis 9 oder einem nach Anspruch 10 hergestellten Gitterbild, wobei das Sicherheitselement bevorzugt ein Sicherheitsfaden, ein Etikett oder ein Transferelement ist.

12. Sicherheitspapier mit einem Gitterbild nach wenigstens einem der Ansprüche 1 bis 9, einem nach Anspruch 10 hergestellten Gitterbild, oder einem Sicherheitselement nach Anspruch 11.

13. Datenträger mit einem Gitterbild nach wenigstens einem der Ansprüche 1 bis 9, einem nach Anspruch 10 hergestellten Gitterbild, einem Sicherheitselement nach Anspruch 11, oder einem Sicherheitspapier nach Anspruch 12, wobei der Datenträger bevorzugt eine Banknote, ein Wertdokument, ein Pass, eine Ausweis- oder Kreditkarte oder eine Urkunde ist.

14. Prägeform zum Erzeugen einer Prägestruktur, mit einem Hauptkörper mit einer Vielzahl von aneinandergrenzenden Gitterfeldern mit einem diffusem, betrachtungswinkelabhängigen visuellen Erscheinungsbild, bei dem jedes Gitterfeld innerhalb seines Umrisses mit einem Gittermuster aus einer Vielzahl von geraden Strichgitterlinien gefüllt ist, wobei jedes Gittermuster eine Vorzugsrichtung aufweist, die einen Betrachtungswinkel festlegt, aus dem das jeweilige Gittermuster visuell erkennbar ist, **dadurch gekennzeichnet, dass** zumindest zwei aneinandergrenzende Gitterfelder zumindest entlang ihres gemeinsamen Umrissbereichs jeweils einen nicht-glattrandigen Umriss aufweisen, nämlich einen Umriss, der gesägt, gekerbt, gezähnt, gelappt, gebuchtet, gewellt, gezackt, oder in Form einer fraktalen Kurve ausgebildet ist, und dass die Abweichungen des nicht-glattrandigen Umrisses von einem gemittelten, glatten Randverlauf, welcher sich durch eine abschnittsweise Mittelung des nicht-glattrandigen Umrisses über eine größere Strecke von einem Millimeter ergibt und dem globalen Umriss des Gitterfelds aus einem Betrachtungsabstand von etwa 30 cm entspricht, periodisch sind, wobei die Periodenlänge unterhalb von 300 $\mu$m liegt, oder dass die Abweichungen des nicht-glattrandigen Umrisses von einem gemittelten, glatten Randverlauf, welcher sich durch eine abschnittsweise Mittelung des nicht-glattrandigen Umrisses über eine größere Strecke von einem Millimeter ergibt und dem globalen Umriss des Gitterfelds aus einem Betrachtungsabstand von etwa 30 cm entspricht, nicht gleichförmig sind und eine mittlere Periodenlänge aufweisen, die unterhalb von 300 $\mu$m liegt, und wobei die Amplitude der Abweichungen des nicht-glattrandigen Umrisses (34) von einem gemittelten, glatten Randverlauf (32) zwischen 10% und 90%, vorzugsweise zwischen 25 % und 75 % der Breite der beteiligten Gitterfelder beträgt.

## Claims

1. A grating image (40) having a plurality of mutually adjoining grating fields ($G_0$, $G_1$, $G_2$) having a viewing-angle-dependent visual appearance in which each grating field ($G_0$, $G_1$, $G_2$) is filled within its contour with a grating pattern ($M_0$, $M_1$, $M_2$) composed of a plurality of straight grating lines, each grating pattern ($M_0$, $M_1$, $M_2$) having a preferred direction that defines a viewing angle from which the respective grating pattern ($M_0$, $M_1$, $M_2$) is visually perceptible,
**characterized in that** at least two mutually adjoining grating fields ($G_1$, $G_2$) each comprise, at least along their common contour region, a non-smooth-edged contour (34), namely a contour (34) that is serrated, notched, toothed, lobed, cleft, corrugated, jagged, or formed in the form of a fractal curve, and **in that** the deviations of the non-smooth-edged contour (34) from an averaged, smooth edge shape (32) that results from a section-wise averaging of the non-smooth-edged contour (34) over a larger segment of one millimeter, and corresponds to the global contour of the grating field from a viewing distance of about 30 cm, are periodic, the period length being below 300 $\mu$m, or **in that** the deviations of the non-smooth-edged contour (34) from an averaged, smooth edge shape (32) that results from a section-wise averaging of the non-smooth-edged contour (34) over a larger segment of one millimeter, and corresponds to the global contour of the grating field from a viewing distance of about 30 cm, are not uniform and have an average period length that is below 300 $\mu$m, and wherein the amplitude of the deviations of the non-smooth-edged contour (34) from an averaged, smooth edge shape (32) is between 10% and 90%, preferably between 25% and 75% of the width of the grating fields involved.

2. The grating image according to claim 1, **characterized in that** the mutually adjoining grating fields ($G_1$, $G_2$) run into one another along their common contour region.

3. The grating image according to at least one of claims 1 to 2, **characterized in that** the mutually adjoining grating fields ($G_1$, $G_2$) each comprise the same non-smooth-edged contour along their common contour region, or **in that** at least one of the mutually adjoining grating fields comprises, in an overlap region along the common contour region, a double-occupancy with its own grating pattern and the grating pattern of the adjoining grating field.

4. The grating image according to at least one of claims 1 to 3, **characterized in that** the grating fields ($G_0$, $G_1$, $G_2$) have an elongated form having a longitudinal direction and a transverse direction, and are preferably formed in the form of strips, rings or in a form that follows the contour of a specified motif, the grating fields preferably having, in the transverse direction, a width below 2 mm, preferably below 1 mm, particularly preferably between 50 $\mu$m and 500 $\mu$m.

5. The grating image according to at least one of claims 1 to 4, **characterized in that** the deviations of the non-smooth-edged contour (34) from an averaged, smooth edge shape (32) are below the resolution limit of the naked eye.

6. The grating image according to at least one of claims 1 to 5, **characterized in that** the deviations of the non-smooth-edged contour (34) from an averaged, smooth edge shape (32) are periodic, the period length being below 200 $\mu$m, preferably between 10 $\mu$m and 100 $\mu$m, or **in that** the deviations of the non-smooth-edged contour (34) from an averaged, smooth edge shape (32) are not uniform and have an average period length that is below 200 $\mu$m, preferably between 10 $\mu$m and 100 $\mu$m.

7. The grating image according to at least one of claims 1 to 6, **characterized in that** the grating patterns ($M_0$, $M_1$, $M_2$) comprise diffractive grating patterns that include parallel, equidistant grating lines that are **characterized by** the grating line parameters spacing, angular orientation and profile, and the grating patterns being visually perceptible having a colored appearance from the viewing angle defined by the preferred direction.

8. The grating image according to at least one of claims 1 to 7, **characterized in that** the grating patterns ($M_0$, $M_1$, $M_2$) comprise achromatic grating patterns that are visually perceptible having a matte, preferably silvery appearance from the viewing angle defined by the preferred direction, the grating lines of the achromatic grating patterns preferably being **characterized by** the grating line parameters orientation, spacing and profile, and in each of the achromatic grating patterns, at least one of said grating line parameters varying randomly with a specified distribution such that the achromatic grating patterns are each **characterized by** the grating pattern parameters average orientation, orientation distribution, average spacing, spacing distribution, profile and profile distribution.

9. The grating image according to at least one of claims 1 to 8, **characterized in that** the preferred directions of the grating patterns of mutually adjoining grating fields differ by 0.5° to 10°, preferably by 2° to 3°.

10. A method for manufacturing a grating image (40), in which

- in a substrate, a plurality of mutually adjoining grating fields ($G_0$, $G_1$, $G_2$) are produced having a viewing-angle-dependent visual appearance in that
- each grating field ($G_0$, $G_1$, $G_2$) is filled within its contour with a grating pattern ($M_0$, $M_1$, $M_2$) composed of a plurality of straight grating lines, each grating pattern ($M_0$, $M_1$, $M_2$) having a preferred direction that defines a viewing angle from which the respective grating pattern ($M_0$, $M_1$, $M_2$) is visually perceptible,
**characterized in that**
- at least two mutually adjoining grating fields ($G_1$, $G_2$) are each furnished along their common contour region with a non-smooth-edged contour (34), namely a contour (34) that is serrated, notched, toothed, lobed, cleft, corrugated, jagged, or formed in the form of a fractal curve, the grating patterns ($M_0$, $M_1$, $M_2$) preferably being produced electron beam lithographically, and
- **in that** the deviations of the non-smooth-edged contour (34) from an averaged, smooth edge shape (32) that results from a section-wise averaging of the non-smooth-edged contour (34) over a larger segment of one millimeter, and corresponds to the global contour of the grating field from a viewing distance of about 30 cm, are periodic, the period length being below 300 $\mu$m, or **in that** the deviations of the non-smooth-edged contour (34) from an averaged, smooth edge shape (32) that results from a section-wise averaging of the non-smooth-edged contour (34) over a larger segment of one millimeter, and corresponds to the global contour of the grating field from a viewing distance of about 30 cm, are not uniform and have an average period length that is below 300 $\mu$m, and wherein the amplitude of the deviations of the non-smooth-edged contour (34) from an averaged, smooth edge shape (32) is between 10% and 90%, preferably between 25% and 75% of the width of the grating fields involved.

11. A security element having a grating image according to at least one of claims 1 to 9 or a grating image manufactured according to claim 10, the security element preferably being a security thread, a label or a transfer element.

12. A security paper having a grating image according to at least one of claims 1 to 9, a grating image manufactured according to claim 10, or a security element according to claim 11.

13. A data carrier having a grating image according to at least one of claims 1 to 9, a grating image manufactured according to claim 10, a security element according to claim 11, or a security paper according to claim 12, the data carrier preferably being a banknote, a value document, a passport, an identification or credit card, or a certificate.

14. An embossing mold for producing an embossing structure, having a main body having a plurality of mutually adjoining grating fields having a diffuse, viewing-angle-dependent visual appearance, in which each grating field is filled within its contour with a grating pattern composed of a plurality of straight grating lines, each grating pattern having a preferred direction that defines a viewing angle from which the respective grating pattern is visually perceptible, **characterized in that** at least two mutually adjoining grating fields each comprise, at least along their common contour region, a non-smooth-edged contour, namely a contour that is serrated, notched, toothed, lobed, cleft, corrugated, jagged, or formed in the form of a fractal curve, and **in that** the deviations of the non-smooth-edged contour from an averaged, smooth edge shape that results from a section-wise averaging of the non-smooth-edged contour over a larger segment of one millimeter, and corresponds to the global contour of the grating field from a viewing distance of about 30 cm, are periodic, the period length being below 300 $\mu$m, or **in that** the deviations of the non-smooth-edged contour from an averaged, smooth edge shape that results from a section-wise averaging of the non-smooth-edged contour over a larger segment of one millimeter, and corresponds to the global contour of the grating field from a viewing distance of about 30 cm, are not uniform and have an average period length that is below 300 $\mu$m, and wherein the amplitude of the deviations of the non-smooth-edged contour (34) from an averaged, smooth edge shape (32) is between 10% and 90%, preferably between 25% and 75% of the width of the grating fields involved.

**Revendications**

1. Image quadrillée (40) comportant un grand nombre de champs de grille adjacents ($G_0$, $G_1$, $G_2$) avec un aspect visuel dépendant de l'angle de vue, dans laquelle chaque champ de grille ($G_0$, $G_1$, $G_2$) est rempli dans son contour avec un motif de grille ($M_0$, $M_1$, $M_2$) composé d'une pluralité de lignes de grille en pointillés droites, dans lequel chaque motif de grille ($M_0$, $M_1$, $M_2$) présente une direction préférée, qui définit un angle de vue, à partir duquel le motif de grille respectif ($M_0$, $M_1$, $M_2$) est visuellement reconnaissable,

   **caractérisée en ce qu'**au moins deux champs de grille adjacents ($G_1$, $G_2$) présentent chacun un contour à bords non lisses (34) au moins le long de leur zone commune de contour, à savoir un contour (34) scié, cranté, denté, lobé, sinueux, ondulé, dentelé ou en forme de courbe fractale, et
   **en ce que** les écarts du contour à bords non lisses (34) d'un profil de bord lisse moyen (32), qui résultent d'une moyenne de section du contour à bords non lisses (34) sur une distance plus longue d'un millimètre et correspond au contour global du champ de la grille à partir d'une distance d'observation d'environ 30 cm, sont périodiques, dans lequel la longueur de période est inférieure à 300 $\mu$m, ou que les écarts du contour à bords non lisses (34) par rapport à un profil de bord lisse moyen (32), qui résulte d'une moyenne de section du contour à bords non lisses (34) sur une distance plus longue d'un millimètre et correspond au contour global du champ de la grille à une distance d'observation d'environ 30 cm, ne sont pas uniformes, et présentent une longueur de période moyenne, qui est inférieure à 300 $\mu$m, et l'amplitude des écarts du contour à bords non lisses (34) par rapport à un profil de bord lisse moyen (32) étant comprise entre 10 % et 90 %, de préférence comprise entre 25 % et 75 % de la largeur des champs de grille concernés.

2. Image quadrillée selon la revendication 1, **caractérisée**

   • **en ce que** les champs de grille adjacents ($G_1$, $G_2$) se rejoignent le long de leur zone de contour commune.

3. Image quadrillée selon au moins une des revendications 1 à 2, **caractérisée en ce que** les champs de grille adjacents ($G_1$, $G_2$) présentent chacun le même contour non lisse le long de leur zone de contour commune, ou qu'au moins un des champs de grille adjacents le long de la zone de contour commune dans une zone de superposition présente une double occupation avec son propre modèle de grille et le modèle de grille du champ de grille adjacent.

4. Image quadrillée selon au moins une des revendications 1 à 3, **caractérisée en ce que** les champs de grille ($G_0$, $G_1$, $G_2$) présentent une forme allongée avec une direction longitudinale et une direction transversale, et sont configurés de préférence sous forme de bandes, d'anneaux ou dans une forme suivant les contours d'un motif donné, dans laquelle les champs de grille dans la direction transversale présentent de préférence une largeur inférieure à 2 mm, de préférence inférieure à 1 mm, de manière particulièrement préférée comprise entre 50 et 500 $\mu$m.

5. Image quadrillée selon au moins une des revendications 1 à 4, **caractérisée en ce que** les écarts du contour à bords non lisses (34) par rapport à un profil de bord lisse moyen (32) sont inférieurs à la limite de résolution de l'œil nu.

6. Image quadrillée selon au moins une des revendications 1 à 5, **caractérisée en ce que** les écarts du contour à bords non lisses (34) par rapport à un profil de bord lisse moyen (32) sont périodiques, dans lequel la longueur de période est inférieure à 200 $\mu$m, de préférence comprise entre 10 $\mu$m et 100 $\mu$m, ou que les écarts du contour à bords non lisses (34) par rapport à un profil de bord lisse moyen (32) ne sont pas uniformes et ont une longueur de période moyenne inférieure à 200 $\mu$m, de préférence comprise entre 10 $\mu$m et 100 $\mu$m.

7. Image quadrillée selon au moins une des revendications 1 à 6, **caractérisée en ce que** les motifs de grille ($M_0$, $M_1$, $M_2$) comprennent des motifs de grille diffractifs, qui contiennent des lignes de grille en pointillés parallèles et équidistants, qui sont **caractérisées par** les paramètres des lignes de grille tels qu' espacement, orientation angulaire et profilage des lignes de grille, et dans laquelle les motifs de grille sont visuellement reconnaissables à partir de l'angle de vue défini par la direction préférée avec un aspect visuel coloré.

8. Image quadrillée selon au moins une des revendications 1 à 7, **caractérisée en ce que** les motifs de grille ($M_0$, $M_1$, $M_2$) comprennent des motifs de grille achromatiques, qui sont reconnaissables visuellement à partir de l'angle de vue défini par la direction préférentielle avec un aspect mat, de préférence argenté, dans lequel les lignes de grille en pointillés du motif de grille achromatique sont de préférence **caractérisées par** les paramètres de ligne de grille tels qu'orientation, espacement et profilage, et dans chacun des motifs de grille achromatique, au moins un de ces paramètres de ligne de grille varie de manière aléatoire avec une diffusion prédéterminée, de sorte que les motifs de grille achromatiques soient chacun **caractérisés par** les paramètres de motif de grille tels que orientation moyenne, étalement d'orientation, espacement moyen, étalement d'espacement, profilage et étalement de profilage.

9. Image quadrillée selon au moins une des revendications 1 à 8, **caractérisée en ce que** les directions préférentielles des motifs de grille de champs de grille adjacents diffèrent de 0,5° à 10°, de préférence de 2° à 3°.

10. Procédé de production d'une image quadrillée (40), dans lequel

    - dans un substrat un grand nombre de champs de grille adjacents ($G_0$, $G_1$, $G_2$) avec un aspect visuel dépendant de l'angle de vue sont générés, en

    - remplissant chaque champ de grille ($G_0$, $G_1$, $G_2$) dans son contour par un motif de grille ($M_0$, $M_1$, $M_2$) composé d'un grand nombre de lignes de grille droites, dans lequel chaque motif de grille ($M_0$, $M_1$, $M_2$) présente une direction préférentielle qui définit un angle de vue, à partir duquel le motif de grille respectif ($M_0$, $M_1$, $M_2$) est visuellement reconnaissable,

    **caractérisé en ce que**

    - au moins deux champs de grille adjacents ($G_1$, $G_2$) sont pourvus chacun d'un contour à bords non lisses (34) le long de leur zone de contour commune, à savoir un contour (34) qui est scié, cranté, denté, lobé, sinueux, ondulé, dentelé ou en forme de courbe fractale, dans lequel les motifs de grille ($M_0$, $M_1$, $M_2$) sont de préférence générés par lithographie par faisceau d'électrons, et

    - que les écarts du contour à bords non lisses (34) par rapport à un profil de bord lisse moyen (32), qui est **caractérisé par** une moyenne de section du contour à bords non lisses (34) résulte en une distance plus grande d'un millimètre et correspond au contour global du champ du grille à une distance d'observation d'environ 30 cm, sont périodiques, avec une longueur de période inférieure à 300 $\mu$m, ou que les écarts du contour à bords non lisses (34) par rapport à un profil de bord lisse moyen (32), qui résulte d'une moyenne de section du contour à bords non lisses (34) sur une distance plus longue d'un millimètre et correspond au contour global du champ de la grille à partir d'une distance d'observation d'environ 30 cm, ne sont pas uniformes et présentent une longueur de période moyenne, qui est inférieure à 300 $\mu$m, et l'amplitude des écarts du contour à bords non lisses (34) par rapport à un profil de bord lisse moyen (32) étant comprise entre 10 % et 90 %, de préférence comprise entre 25 % et 75 % de la largeur des champs de grille concernés.

11. Elément de sécurité comportant une image quadrillée selon au moins une des revendications 1 à 9 ou une image quadrillée produite selon la revendication 10, dans lequel l'élément de sécurité est de préférence un fil de sécurité, une étiquette ou un élément de transfert.

12. Papier de sécurité comportant une image quadrillée selon au moins une des revendications 1 à 9, une image quadrillée produite selon la revendication 10, ou un élément de sécurité selon la revendication 11.

13. Support de données comportant une image quadrillée selon au moins une des revendications 1 à 9, une image quadrillée produite selon la revendication 10, un élément de sécurité selon la revendication 11 ou un papier de sécurité selon la revendication 12, dans lequel le support de données est de préférence un billet de banque, un document de valeur, un passeport, une carte d'identité ou de crédit ou un certificat.

14. Moule de gaufrage pour produire une structure de gaufrage, comprenant un corps principal ayant une pluralité de champs de grille adjacents avec un aspect visuel diffus dépendant de l'angle de vue, dans lequel chaque champ de grille est rempli dans son contour avec un motif de grille composé d'une pluralité de lignes de grille en pointillés droites, dans lequel chaque motif de grille présente une direction préférée, qui définit un angle de vue, à partir duquel le motif de grille respectif est visuellement reconnaissable, **caractérisé en ce qu'**au moins deux champs de grille adjacents présentent chacun un contour non lisse au moins le long de leur zone commune de contour, à savoir un contour scié, cranté, denté, lobé, sinueux, ondulé, dentelé ou en forme de courbe fractale, et **en ce que** les écarts du contour à bords non lisses d'un profil de bord moyen lisse, qui résultent d'une moyenne de section du contour à bords non lisses sur une distance plus longue d'un millimètre et correspond au contour global du champ de la grille à partir d'une distance d'observation d'environ 30 cm, sont périodiques, dans lequel la longueur de période est inférieure à 300 $\mu$m, ou que les écarts du contour à bords non lisses par rapport à un profil de bord lisse moyen, qui résulte d'une moyenne de section du contour à bords non lisses sur une distance plus longue d'un millimètre et correspond au contour global du champ de la grille à une distance d'observation d'environ 30 cm, ne sont pas uniformes, et présentent une longueur de période moyenne, qui est inférieure à 300 $\mu$m, et l'amplitude des écarts du contour à bords non lisses (34) par rapport à un profil de bord lisse moyen (32) étant comprise entre 10 % et 90 %, de préférence comprise entre 25 % et 75 % de la largeur des champs de grille concernés.

10

12

14 — 50

## Fig. 1

12

20

22-C

22-B

22-A

22

## Fig. 2

Fig. 3a

Fig. 3b

Fig. 4

Fig. 5

Fig. 6

Fig. 7a

Fig. 7b

Fig. 7c

Fig. 7d

Fig. 8

**EP 2 633 347 B2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005038500 A1
- JP 2000121815 A
- WO 2005071444 A2